# EUROPÄISCHE PATENTANMELDUNG

(11) **EP 2 478 943 A1**
(43) Veröffentlichungstag der Anmeldung: **25.07.2012**
(21) Anmeldenummer: 12000253.0
(22) Anmeldetag: 17.01.2012
(51) Int. Cl.: A63F 13/10, G10H 1/36

(54) **Videospiel durch Fingerklopfen**

(30) Priorität: 19.01.2011 DE 102011008950
(71) Anmelder: FISHLABS Entertainment GmbH, 20457 Hamburg (DE)
(72) Erfinder: Schade, Michael, 20357 Hamburg (DE); Lohr, Christian, 22339 Hamburg (DE)
(74) Vertreter: Groth, Wieland

(57) **Zusammenfassung**

Die Erfindung betrifft ein Videospielsystem für wenigstens einen Spieler mit einer Datenverarbeitungseinrichtung, insbesondere einem mobilen Endgerät (9), zum Laden eines Spielprogramms, mit einem Bildschirm (11) zur Anzeige wenigstens einer dem jeweiligen Spieler zugeordneten Bildschirmfigur (12), die zur Ausführung einer rhythmisch fortlaufenden Bewegung in unterschiedlichen Geschwindigkeiten bestimmt ist, mit einem mit der Datenverarbeitungseinrichtung (9) datenleitend in Verbindung stehenden Mikrofon (10), wobei das Spielprogramm einen Erkennungsalgorithmus für zeitlich voneinander beabstandete mit dem Mikrofon (10) detektierbare Klopflaute (1. 2, 3, 4) aufweist und erkannten Klopflauten (1, 2, 3, 4) jeweils ein die Geschwindigkeit der Bewegung der Bildschirmfigur (12) bestimmendes elektronisches Steuersignal (30) zuordnet.

## Beschreibung

Die Erfindung betrifft ein Vdeospielsystem für wenigstens einen Spieler nach dem Oberbegriff des Anspruchs 1 sowie ein Verfahren zur Durchführung eines Videospiels mit dem Videospielsystem.

Videospielsysteme und Verfahren zu ihrer Durchführung sind im Stand der Technik hinlänglich bekannt.

Es wird zunehmend Wert darauf gelegt, dass der Spieler über das bloße Drücken von Tasten oder das Bedienen eines Joysticks das Videospiel steuert. Beispielsweise sind im Spielsystem Wii Sportspiele bekannt, bei dem ein Spieler ein Steuergerät in seiner Hand hält und mit ihm die reale Sportbewegung nachahmt. Das Steuergerät registriert mit einer Reihe von Bewegungs- und Beschleunigungssensoren die Bewegung der Hand des Spielers, und das Spielprogramm rechnet es in eine Animation eines Bewegungsablaufs einer auf dem Bildschirm dargestellten Bildschirmfigur um.

Darüber hinaus sind Karaoke-Videospiele bekannt, bei denen die Qualität des Gesangs mehrerer Spieler bewertet und verglichen wird.

Es ist Aufgabe der Erfindung, ein verbessertes Videospielsystem zur Verfügung zu stellen, das insbesondere für mobile Endgeräte geeignet ist, sowie ein Verfahren zur Durchführung eines solchen Spiels.

Die Aufgabe wird durch das eingangs genannte Videospielsystem mit den kennzeichnenden Merkmalen des Hauptanspruchs erfüllt.

Das erfindungsgemäße Videospielsystem macht von einer neuartigen Schnittstelle Mensch-Videospiel Gebrauch, indem die einem Spieler zugeordnete, zur Ausführung einer rhythmisch fortlaufenden Bewegung unterschiedlicher Geschwindigkeit bestimmte Bildschirmfigur durch vom Spieler selbst erzeugte Klopflaute gesteuert wird. Der Rhythmus der Klopflaute wird von dem Spieler vorzugsweise ausschließlich frei erzeugt. Insbesondere orientiert sich der Speiler vorzugsweise nicht an einem Referenzsignal, dem es nachzufolgen gilt.

Klopflaute sind hier einzelne kurze akustische Signale, die insbesondere durch das Tippen von Spielfingem oder das Schlagen der Handflächen oder eines Gegenstand auf eine harte Oberfläche vom Spieler erzeugt werden. Die Signalbreite der Klopflaute liegt vorzugsweise unter 1ms, besonders bevorzugt unter 0,1ms. Die Klopflaute werden von einem Mikrofon detektiert, und über einen Erkennungsalgorithmus werden die Klopflaute einzeln erkannt und in einzelne elektronische Steuersignale dem Spielprogramm zugeführt. Mit den Steuersignalen wird die Bewegung der Bildschirmfigur bestimmt.

Die Bildschirmfigur ist vorzugsweise mittels einer Animationssoftware, z. B. einer graphischen Schnittstellensoftware, erzeugbar und bewegt sich in einer eindimensionalen Richtung. Die Geschwindigkeit der Bildschirmfigur in der eindimensionalen Richtung ist desto größer, je kürzer zeitliche Abstände der Klopflaute bzw. Steuersignale sind.

In einer Ausführungsform der Erfindung werden weitere Bildschirmfiguren erzeugt, die keinem Speiler zugeordnet sind. Deren Bewegung ist automatisch vom der Animationssoftware generiert, Die Bildschirmfiguren können dabei ein Wettrennen gegeneinander ausführen.

Unter einer Datenverarbeitungseinrichtung wird hier insbesondere ein mobiles Endgerät, vorzugsweise ein digitales mobiles Endgerät, wie z. B. ein Mobiltelefon, beispielsweise ein iPhone®, ein Lesegerät, beispeilsweise ein iPad®, verstanden. Es kann sich dabei aber auch um stationäre Einrichtungen wie PCs handeln.

Die Erfindung basiert darauf, eine Bildschirmfigur eines Videospiels mit vorzugsweise durch den Spieler selbst erzeugten Klopflauten zu steuern. Das Videospiel kann auch bspw. im Zug durchgeführt werden, wo nicht sehr viel Raum zur Bewegung zur Verfügung steht. Das Videospiel ist zur Durchführung auf modernen mobilen Endgeräten geeignet, die über keine physikalische Tastatur mehr verfügen.

Grundsätzlich kann ein Videospiel auch von mehreren Spielern gespielt werden, die nacheinander eine ihnen zugeordnete Bildschirmfigur steuern. Die Bildschirmfiguren führen dabei ein Wettrennen gegeneinander aus. Die Ergebnisse mehrerer Rennen jedes Spielers können gespeichert und miteinander verglichen und ausgewertet werden, und es wird ein Gesamtsieger ermittelt.

Vorzugsweise weist das Videospielsystem einen Audiopuffer zur Speicherung der vom Mikrofon fortlaufend detektierten Lautstärken innerhalb eines laufenden ersten Zeitintervalls auf. Ein erster Speicher ist für die Speicherung der ersten Durchschnittswerte der Lautstärke über das fortlaufende erste Zeitintervall vorgesehen. Die ersten Durchschnittswerte der Lautstärke entsprechen im Wesentlichen der aktuellen vom Spieler wahrgenommenen Lautstärke der Umgebungsgeräusche, insbesondere der von ihm erzeugten Klopflaut. In einem zweiten Speicher werden über ein fortlaufendes zweites Zeitintervall aus den ersten Durchschnittswerten gebildete zweite Durchschnittswerte abgelegt. Das zweite Zeitintervall ist vorzugsweise deutlich länger als das erste Zeitintervall, beispielhafte Größen sind eine Sekunde für das zweite Zeitintervall und zehn Millisekunden für das erste Zeitintervall, Erfindungsgemäß werden die ersten Durchschnittswerte und die zweiten Durchschnittswerte fortlaufend in einer Vergleichseinheit miteinander verglichen, und bei Überschreiten einer vorgebbaren Differenz wird ein Klopflaut erkannt. Das Erkennen des Klopflautes erzeugt ein Steuersignal, das die Bewegung der Bildschirmfigur bestimmt.

In einer Weiterbildung der Erfindung ist eine zweite Vergleichseinheit vorgesehen, in der zeitliche Abstände zwischen aufeinanderfolgenden, aus Klopflauten gebildeten Takten bestimmbar sind, die mit zugeordneten Referenzwerten einer Referenzkurve vergleichbar sind und aus Abweichungen der zeitlichen Abstände von den zugeordneten Referenzwerten die Geschwindigkeit der Bewegung der Bildschirmfigur bestimmbar ist. Dabei kann ein zusätzlicher Schwierigkeitsgrad eingebracht werden, der das Videospiel noch interessanter macht.

Hinsichtlich des Verfahrens wird die Aufgabe durch ein gattungsgemäßes Verfahren mit den Merkmalen des Anspruchs 5 erfüllt. Günstigerweise werden die Klopflaute von einem Spieler, vorzugsweise durch die Spielfinger des Spielers, erzeugt. Die Klopflaute werden von einem Mikrofon detektiert, das mit der Datenverarbeitungseinrichtung, insbesondere dem mobilen Endgerät, datenleitend in Verbindung steht. Von einem Erkennungsalgorithmus werden die zeitlich voneinander beabstandeten Klopflaute erkannt. Den erkannten Klopflauten werden jeweils elektronische Steuersignale zugeordnet, die eine rhythmisch fortlaufende Bewegung einer Bildschirmfigur bestimmen. Dazu werden zeitliche Abstände der elektronischen Steuersignale ermittelt und mittels der Animationssoftware in die Bewegung der Bildschirmfigur umgesetzt, vorzugsweise derart, dass die Bewegung desto schneller ist, je kürzer die zeitlichen Abstände aufeinanderfolgender Steuersignale sind.

Vorzugsweise werden die Klopflaute in Vierergruppen jeweils eng beieinander liegender Klopflaute durch das Auftippen von vier Spielfingern einer Hand des Spielers auf das Display des mobilen Endgerätes erzeugt. Den einzelnen Klopflauten kann jeweils eine Bewegung einer Gliedmaße des Spielers zugeordnet werden, bspw. wenn es sich bei der Bildschirmfigur um einen Läufer in einem 100-Meter-Rennen handelt, kann die Laufgeschwindigkeit des Läufers dadurch erhöht werden, dass die einzelnen Klopflaute in geringeren Abständen voneinander erzeugt werden.

In einer weiteren Ausführungsform des erfindungsgemäßen Videospielsystems und des Verfahrens ist die Bildschirmfigur als Pferd ausgebildet, und jedem Spielfinger des Spielers ist ein Bein des Pferdes zugeordnet, wodurch ebenfalls durch schnelles Erzeugen aufeinanderfolgender Klopflaute die Geschwindigkeit des Pferdes bestimmt werden kann.

Alternativ ist es auch denkbar, nicht jedem Klopflaut über ein Steuersignal eine Beinbewegung des Pferdes zuzuordnen, sondern die Klopflaute in Vierergruppen zusammenzufassen und durch den Abstand der Vierergruppen voneinander ein rhythmisches Signal zu erzeugen, mit dem die Bildschirmfigur, insbesondere das Pferd, gesteuert wird. Wenn die Abfolge der Vierergruppen ungleichmäßig ist, wird die Geschwindigkeit des Pferdes gesenkt. Wenn die Abfolge der Vierergruppen sehr gleichmäßig ist, wird die Geschwindigkeit des Pferdes erhöht.

In einer bevorzugten Weiterbildung des Verfahrens werden aufeinanderfolgende erkannte Klopflaute in jeweils einem Takt zusammengefasst und ein zeitlicher Abstand zwischen aufeinderfolgenden Takten bestimmt und die Geschwindigkeit der Bewegung der Bildschirmfigur aus dem zeitlichen Abstand bestimmt. Das kann insbesondere dadurch geschehen, dass in einer zweiten Vergleichseinheit zeitliche Abstände zwischen aufeinanderfolgenden, aus Klopflauten gebildeten Takten bestimmt werden, den zeitlichen Abständen Referenzwerte zugeordnet werden und aus Abweichungen der zeitlichen Abstände von den zugeordneten Referenzwerten die Geschwindigkeit der Bewegung der Bildschirmfigur bestimmt wird.

Dabei muss die Geschwindigkeit des Fingerklopfens der Referenzkurve angepasst werden, um ein günstiges Ergebnis zu erzielen. Insbesondere kann die Geschwindigkeit der Bildschirmfigur desto höher bestimmt werden, je geringer die Abweichung der zeitlichen Abstände von den zugeordneten Referenzwerten bestimmt wird.

Die Erfindung wird anhand eines Ausführungsbeispiels in fünf Figuren beschrieben. Dabei zeigen:
- Fig. 1: einen schematischen Aufbau des erfindungsgemäßen Videospielsystems,
- Fig. 2: eine graphische Darstellung der Erzeugung von vier aufeinanderfolgenden Klopflauten,
- Fig. 3: eine schematische Darstellung des Erkennungsalgorithmus,
- Fig. 4: eine graphische Darstellung zur Bestimmung der die Bewegungsgeschwindigkeit bestimmenden zeitlichen Abweichungen,
- Fig. 5: eine schematische Darstellung eines einzelnen Klopflautes.

Das erfindungsgemäße Videospielsystem umfasst ein mobiles Endgerät 9, z. B. ein Mobiltelefon, mit Lautsprecher 10 und Display 11 sowie eine Spielsoftware mit einer Animation einer eine rhythmisch, in der Schnelligkeit variable Bewegung ausführenden Bildschirmfigur 12. Bei der Bildschirmfigur 12 kann es sich um einen Sprinter, ein Rennpferd o. Ä. handeln. Die Spielsoftware wird insbesondere aus dem Internet auf das mobile Endgerät heruntergeladen. Bei dem mobilen Endgerät kann es sich um ein handelsübliches iPhone® handeln, bei dem die Spielsoftware mit einer Betriebssoftware wie iTunes® als Applikation heruntergeladen wird.

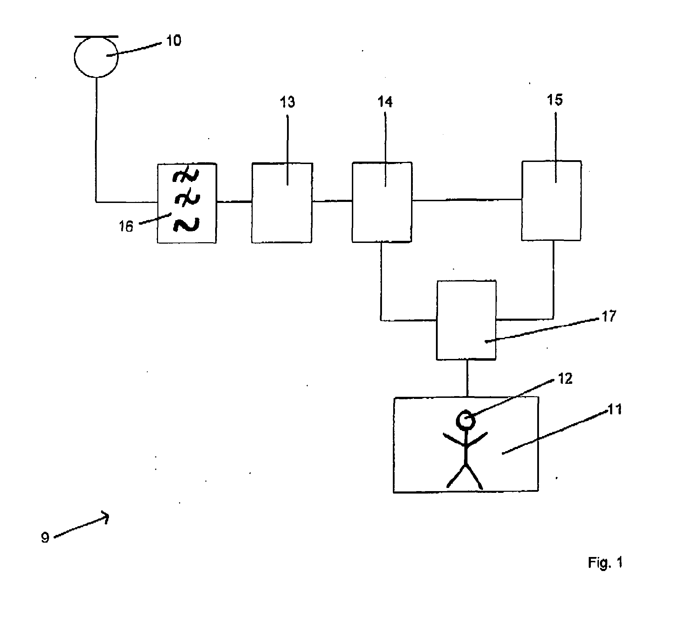

Der Lautsprecher 10 ist mit einem Audiopuffer 13 verbunden, in dem die innerhalb eines ersten laufenden Zeitintervalls Δt1 mit dem Lautsprecher 10 detektierten Außensignale fortlaufend zwischengespeichert werden. In diesem Ausführungsbeispiel beträgt die Länge des ersten Zeitintervalls Δt1 etwa 10 Millisekunden. Es sind aber auch andere erste Zeitintervalllängen Δt1 denkbar. Somit sind in dem Audiopuffer 13 ständig die Außensignale des letzten ersten Zeitintervalls Δt1, d. h. der letzten zehn Millisekunden gespeichert. In Fig. 1 ist dem Audiopuffer 13 ein LowPass Filter 16 vorgeschaltet, der Nebengeräusche dämpft.

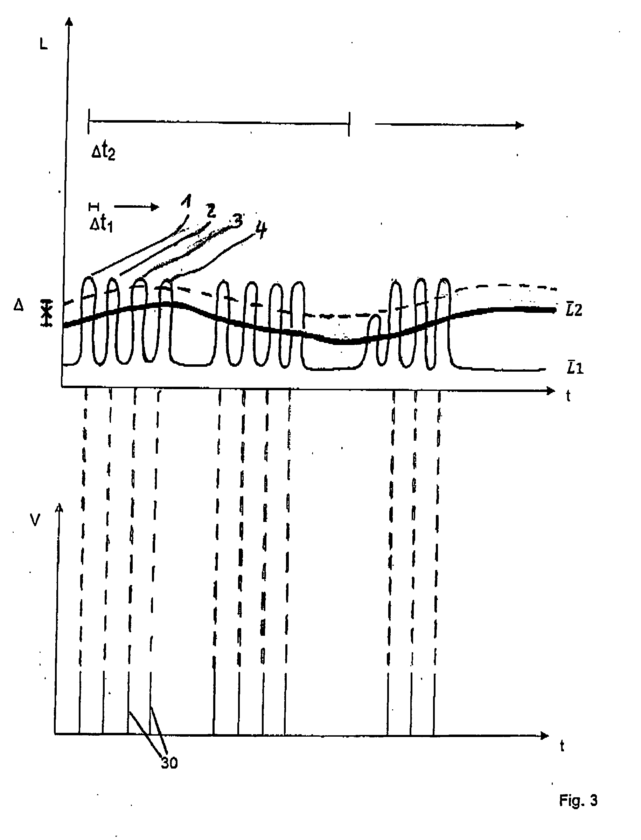

Es wird fortlaufend ein erster Durchschnittswert L̅1, der Lautstärke L1 über das erste Zeitintervall Δt1 der im Audiopuffer 13 abgelegten Außensignale ermittelt. Der zeitliche Verlauf der Änderung des ersten Durchschnittswertes L̅1 ist in Fig. 3 als Kurve aufgetragen. Eine so ermittelte Liste erster Durchschnittswerte L̅1 wird in einem ersten Speicher 14 abgelegt. Die im ersten Speicher 14 abgelegten ersten Durchschnittswerte L̅1 der Lautstärke entsprechen im Wesentlichen den tatsächlich wahrgenommenen Lautstärkewerten, weil das Gehör eine Wahrnehmungsunschärfe aufweist.

In einem zweiten Speicher 15 werden aus den ersten Durchschnittswerten L̅1 zweite Durchschnittswerte L̅2 über ein im Vergleich zum ersten Zeitintervall Δt1 deutlich längeres Zeitintervall Δt2 von bspw. einer Sekunde berechnet. In dem zweiten Speicher 15 ist damit jederzeit die durchschnittliche Lautstärke L̅2 der Außensignale des letzten zweiten Zeitintervalls At2, d. h. hier der letzten Sekunde abgespeichert. Zu jedem Zeitpunkt existieren ein schnell veränderlicher erster und ein langsam veränderlicher zweiter Durchschnittswert der Lautstärken L̅1, L̅2.

Die ersten Durchschnittswerte L̅1 und die zweiten Durchschnittswerte L̅2 werden zu jedem Zeitpunkt in einer Vergleichseinheit 17 miteinander verglichen. In der Vergleichseinheit 17 werden in diesem Ausführungsbeispiel die Lautstärkedurchschnittswerte der letzten zehn Millisekunden mit den Lautstärkedurchschnittswerten der letzten Sekunde verglichen. Wenn der erste Durchschnittswert L̅1 um eine in Dezibel vorgegebene Lautstärkedifferenz Δ über dem zweiten Durchschnittswert L̅2 liegt, wird ein Klopflaut 1, 2, 3, 4 erkannt und ein Steuersignal ausgegeben. Die Steuersignale werden der Animationssoftware einer auf dem Display erscheinenden Bildschirmfigur zugeführt.

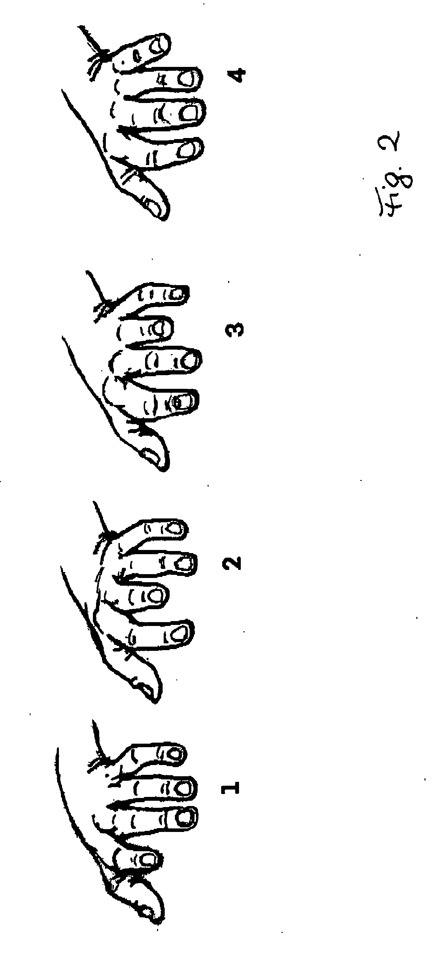

Fig. 2 zeigt beispielhaft die Erzeugung von Klopflauten 1, 2, 3, 4 durch das Auftippen von vier Spielfingern einer Hand des Spielers auf eine Tischplatte oder das Display des mobilen Endgerätes, in jedem Fall aber in Empfangsweite des Lautsprechers.

Fig. 3 zeigt im oberen Teil das zeitliche Verhalten t der ersten und zweiten Durchschnittswerte L̅1, L̅2 der Lautstärke L. Der Spieler erzeugt mit vier seiner Spielfinger voneinander zeitlich beabstandete Vierergruppen von Klopflauten 1, 2, 3, 4, deren zeitlicher Lautstärkeverlauf über ein laufendes Zeitintervall in dem Audiopuffer 13 abgelegt wird. In dem ersten Speicher 14 wird der zeitliche Verlauf des ersten Durchschnittswerts L̅1 der Lautstärke L über die jeweils letzten zehn Millisekunden Δt1 abgelegt. Der im ersten Speicher 14 abgelegte zeitliche Verlauf des ersten Durchschnittswerts L̅1 der Lautstärke L entspricht der mit L̅1 gekennzeichneten Kurve in Fig. 3. In dem zweiten Speicher 15 wird die über das etwa 10-fach längere zweite Zeitintervall bestimmte zweite Durchschnittslautstärke Δt2 gespeichert. Die zweite Durchschnittslautstärke At2 ist damit wesentlich weniger volatil. Ihr Verlauf ist durch die mit L̅2 gekennzeichnete Kurve in Fig. 3 dargestellt. Insbesondere trägt sie dauerhaften Hintergrundgeräuschen durch Anhebung ihres Wertes Rechnung.

Wenn der erste Lautstärkedurchschnittswert L̅1 und der zweite Lautstärkedurchschnittswert L̅2 um eine Differenz Δ voneinander abweichen, wird ein 1, 2, 3, 4 erkannt und für jeden Klopflaut 1, 2, 3, 4 ein Steuersignal 30 gemäß der unteren Kurve in Fig. 3 herausgegeben. Die Steuersignale 30 steuern die Animation der Bildschirmfigur 12, indem sie insbesondere ihre Bewegungsgeschwindigkeit bestimmen.

In einer ersten Variante wird jedem Steuersignal 30 eine Bewegung einer Gliedmaße einer Bildschirmfigur 12 zugeordnet. Bei der Bildschirmfigur 12 kann es sich um einen Sprinter handeln, wobei ein Steuersignal 30 der Bewegung eines Beines und das dem einen Steuersignal folgende Steuersignal dem anderen Bein zugeordnet wird und somit der Sprinter desto schneller läuft, je schneller die Abfolge der Steuersignale 30 ist.

Des Weiteren können die Steuersignale 30 in einer anderen Animation der Bewegung eines Rennpferdes zugeordnet werden, wobei jedes Steuersignal 30 der Vierergruppe einer Bewegung eines jeweiligen Beines des Pferdes zugeordnet wird. Es ist jedoch auch denkbar, die Steuersignale 30 zunächst in den voneinander beabstandeten Vierergruppen auszuwerten und ein weiteres rhythmisches Steuersignal zu erzeugen, das dem Bewegungsrhythmus des Pferdes zugeordnet wird.

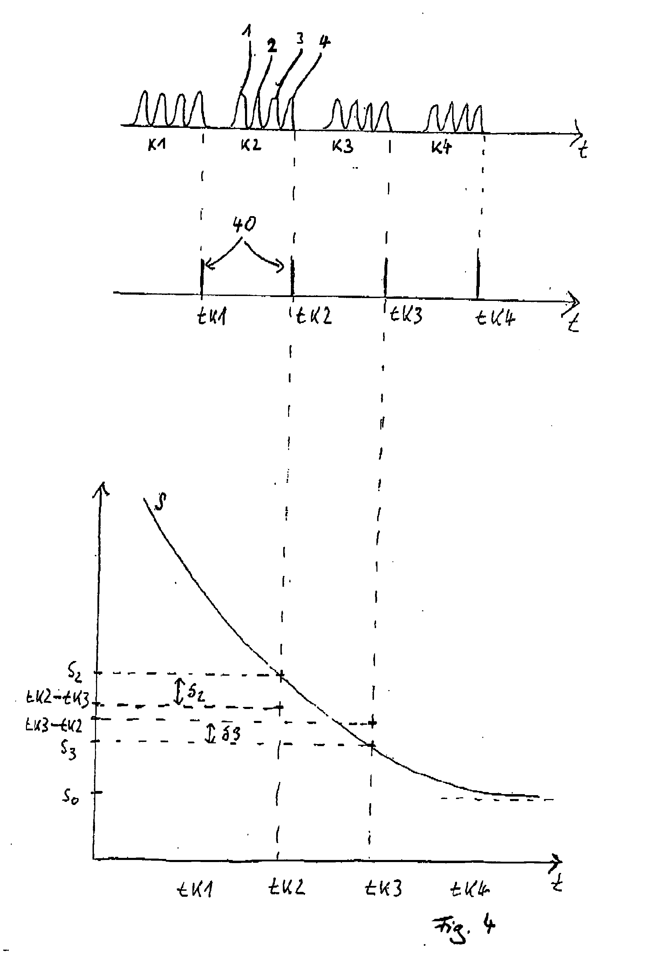

Fig. 4 zeigt in einer graphischen Darstellung eine Weiterbildung der Erfindung. Dabei wird zusätzlich zur Bestimmung der Steuersignale 30 gemäß Fig. 3 eine Zuordnung von Taktzeitpunkten tK1, tK2, tK3 ... zu Gruppen von Klopflauten, die als Takte K1. K2, K3, K4 ... bezeichnet werden, vorgenommen. Zu diesen Taktzeitpunkten tK1, tK2, tK3 ... wird jeweils ein Taktsignal 40 abgegeben. Dazu werden die Klopflaute 1, 2, 3, 4 gemäß Fig. 3 in Takte K1, K2, K3, K4 ... gruppiert. Es bietet sich für die Grupplerung insbesondere an, die durch das aufeinanderfolgende Auftippen von vier Spielfingem einer Hand erzeugten Klopflaute 1, 2, 3, 4 in aufeinanderfolgenden Takten K1, K2, K3, K4 ... zusammenzufassen und jedem Takt jeweils einen Zeitpunkt tK1, tK2, tK3 ... zuzuordnen, an dem jeweils ein Taktsignal 40 abgegeben wird. Der jeweils zugeordnete Taktzeitpunkt tK1, tK2, tK3 ... ist hier der Zeitpunkt des jeweils letzten Klopflautes 1, 2, 3, 4 innerhalb des jeweiligen Taktes K1, K2, K3, K4 ... Die Taktzeitsignale 40 werden in einer nicht dargestellten zweiten Vergleichseinheit erfasst, und in der zweiten Vergleichseinheit werden die Taktzeitpunktdifferenzen tK2 - tK1, tK3 - tK2, tK4 - tK3 ... von aufeinanderfolgenden Taktzeitpunkten tK1, tK2, tK3 ... bestimmt Die Zeitdifferenzen tK2 - tK1, tK3 - tK2, tK4 - tK3 ... werden ebenfalls erfasst und mit Referenzwerten S2, S3, S4 , ... verglichen. Die Referenzwerte S2, S3, S4 ... bestimmen sich aus Punkten einer stetigen Kurve S, die beispielhaft In Fig. 4 dargestellt ist. Jedem Zeitpunkt tK1, tK2, tK3 ... kann ein Referenzwert S2, S3, S4 ... eindeutig zugeordnet werden. Zusätzlich wird ab dem Taktzeitpunkt tK2 jedem Taktzeitpunkt die zeitliche Differenz zum vorhergehenden Taktzeitpunkt zugeordnet, also der Taktzeit tK2 die Taktzeitdifferenz tK2 - tK1, der Taktzeit tK3 die Taktzeitdifferenz tK3 - tK2, der Taktzeit tK4 die Taktzeitdifferenz tK4 - tK3 usw. Gemäß Fig. 4 wird jedem Taktzeitpunkt tK1, tK2, tK3 ... ab der zweiten Taktzeit tK2 damit sowohl eine Taktzeitpunktdifferenz tK2 - tK1 als auch ein Referenzwert S2 zugeordnet. Beide werden miteinander verglichen und ihr Absolutabstand 82=S2-(tK2-tK1), δ3=S3-(tK3-tK2) ... bestimmt. Aus den Absolutwertabweichungen wird die Geschwindigkeit der Bewegung der Spielfigur 12 ermittelt in der Weise, dass die Geschwindigkeit ihrer Bewegung desto höher gewählt wird, je geringer der Absolutwert der Abweichung δ2, δ3 ... ist.

Durch den vorzugsweise sich einem asymptotischen Wert S₀ annähernden asymptotischen Verlauf der Referenzkurve S ist der Spieler damit gefordert, über den zeitlichen Verlauf des Spiels die Geschwindigkeit von aufeinanderfolgenden Takten K1, K2, K3, K4 ... von vier Klopflauten 1, 2, 3, 4 zu erhöhen.

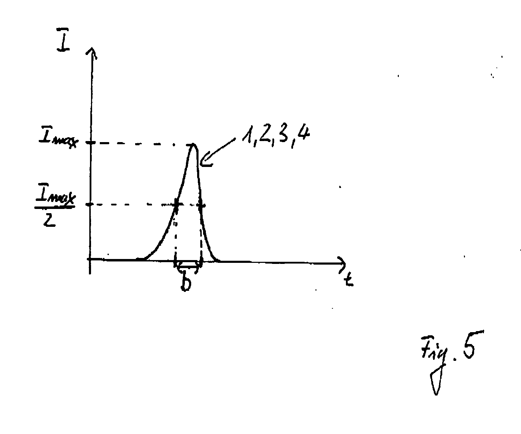

Fig. 5 zeigt eine schematische Darstellung eines beispielhaften Klopflautes 1, 2, 3, 4. Klopflaute 1, 2, 3, 4 können jedoch auch andere Gestalt haben, insbesondere rechteckförmiger sein, deutlich spitzer zulaufend sein und steilere Flanken aufweisen. In Fig. 5 ist die Intensität des Klopflautes 1, 2, 3, 4 über die Zeit aufgetragen. Unter einem Klopflaut 1, 2, 3, 4 wird hier ein Laut verstanden, wie er bei z. B. beim Klopfen eines Spielfingers auf eine Tischplatte erzeugt wird. Der Klopflaut zeichnet sich dadurch aus, dass er einen kurzen spitzen Laut darstellt mit einer geringen Signalbreite b. Die Signalbreite b beträgt vorzugsweise b=0,1 sec, besonders vorzugsweise b=0,01 sec. Es sind auch noch kürzere Klopflaute von b=0,001 sec und weniger denkbar.

### Bezugszeichenliste:

- 1: Klopflaut
- 2: Klopflaut
- 3: Klopflaut
- 4: Klopflaut
- 9: mobiles Endgerät
- 10: Lautsprecher/ Mikrofon
- 11: Display
- 12: Bildschirmfigur
- 13: Audiopuffer
- 14: erster Speicher
- 15: zweiter Speicher
- 16: LowPass Filter
- 17: Vergleichseinheit
- 30: Steuersignal
- 40: Taktsignal
- K1: Takt
- K2: Takt
- K3: Takt
- K4: Takt
- S: Referenzkurve
- S1: Referenzwert
- S2: Referenzwert
- S3: Referenzwert
- S4: Referenzwert
- S₀: asymptotischer Wert
- tK1: Taktzeitpunkt
- tK2: Taktzeitpunkt
- tK3: Taktzeitpunkt
- tK4: Taktzeitpunkt
- tK2 - tK1: Taktzeitdifferenz
- tK3 - tK2: Taktzeitdifferenz
- tK4 - tK3: Taktzeitdifferenz
- t: Zeit
- L: Lautstärke
- Δ: Zeitdifferenz
- Δt1: erstes Zeitintervall
- Δt2: zweites Zeitintervall
- L̅1: erste Durchschnittswerte
- L̅2: zweite Durchschnittswerte
- δ1: Absolutabstand
- δ2: Absolutabstand
- δ3: Absolutabstand
- b: Signalbreite

## Patentansprüche

1. Videospielsystem für wenigstens einen Spieler
mit einer Datenverarbeitungseinrichtung, insbesondere einem mobilen Endgerät (9), zum Laden eines Spielprogramms,
mit einem Bildschirm (11) zur Anzeige wenigstens einer dem jeweiligen Spieler zugeordneten durch eine Animationsoftware erzeugten Bildschirmfigur (12), die zur Ausführung einer rhythmisch fortlaufenden Bewegung in unterschiedlichen Geschwindigkeiten bestimmt ist,
mit einem mit der Datenverarbeitungseinrichtung datenleitend in Verbindung stehenden Mikrofon (10),
**dadurch gekennzeichnet, dass**
das Spielprogramm einen Erkennungsalgorithmus für zeitlich voneinander beabstandete, mit dem Mikrofon (10) detektierbare Klopflaute (1, 2, 3, 4) aufweist und erkannten Klopflauten (1, 2, 3, 4) jeweils ein die Geschwindigkeit der Bewegung der Bildschirmfigur (12) bestimmendes elektronisches Steuersignal (30) zuordnet,

2. Videospielsystem, nach Anspruch 1,
**dadurch gekennzeichnet, dass** die Animationssoftware aus dem zeitlichen Abstand der Steuersignale (30) die Geschwindigkeit der Bewegung der Bildschirmfigur (12) bestimmt.

3. Videospielsystem nach Anspruch 1 oder 2,
**gekennzeichnet durch** einen Audiopuffer (13) zur Speicherung der Lautstärken (L) über ein fortlaufendes erstes Zeitintervall (Δt1),
einen ersten Speicher (14) für erste Durchschnittswerte der Lautstärke (L̅1) über das fortlaufende erste Zeitintervall (Δt1),
einen zweiten Speicher (15) für über ein fortlaufendes zweites Zeitintervall (Δt2) aus den ersten Durchschnittswerten (L̅1) gebildete zweite Durchschnittswerte (L̅2 ), eine erste Vergleichseinheit (17) für den fortlaufenden Vergleich der ersten und zweiten Durchschnittswerte (L̅1, L̅2), die bei Überschreiten einer vorgebbaren Differenz (Δ) einen Klopflaut (31) erkennt.

4. Videospielsystem nach Anspruch 3,
**gekennzeichnet durch** eine zweite Vergleichseinheit, in der zeitliche Abstände (tK2-tK1, tK3-tK2, tK4-tK3, ...) zwischen aufeinanderfolgenden, aus Klopflauten (1, 2, 3, 4) gebildeten Takten (K1, K2, K3, K4, ...) bestimmbar sind, die mit zugeordneten Referenzwerten (S2, S3, S4, ...) einer Referenzkurve (S) vergleichbar sind und aus Abweichungen (δ1, δ2, ...) der zeitlichen Abstände (tK2-tK1, tK3-tK2, tK4-tK3, ...) von den zugeordneten Referenzwerten (S2, S3, S4, ...) die Geschwindigkeit der Bewegung der Bildschirmfigur (12) bestimmbar ist.

5. Verfahren zur Durchführung eines Videospiels mit einem Videospielsystem nach einem der Ansprüche 1 bis 4 mit einer Datenverarbeitungseinrichtung, insbesondere einem mobilen Endgerät (9), mit einem mit der Datenverarbeitungseinrichtung datenleitend in Verbindung stehenden Mikrofon (10), indem Klopflaute (31) von einem der Spieler erzeugt werden,
die Klopflaute (31) von dem Mikrofon (10) detektiert werden,
von einem Erkennungsalgorithmus zeitlich voneinander beabstandete Klopflaute (31) erkannt werden,
erkannten Klopflauten (1, 2, 3, 4)jeweils ein elektronisches Steuersignal (30) zugeordnet wird
und die elektronischen Steuersignale (30) eine Geschwindigkeit einer rhythmisch fortlaufenden Bewegung einer Bildschirmfigur (12) bestimmen.

6. Verfahren nach Anspruch 5,
**dadurch gekennzeichnet, dass** eine Graphiksoftware aus dem zeitlichen Abstand berechnet und die Bildschirmfigur (12) in ihrer Bewegung am Bildschirm angezeigt wird.

7. Verfahren nach Anspruch 5 oder 6,
**dadurch gekennzeichnet, dass** in einem Audiopuffer (13) die Lautstärken (L) über ein fortlaufendes erstes Zeitintervall (Δt1) gespeichert werden,
über das fortlaufende erste Zeitintervall (Δt1) erste Durchschnittswerte der Lautstärke (L̅1) gebildet werden,
über ein fortlaufendes zweites Zeitintervall (Δt2) aus den ersten Durchschnittswerten (L̅1) zweite Durchschnittswerte (L̅2) gebildet werden und die zweiten Durchschnittswerte (L̅2) mit den ersten Durchschnittswerten (̅L̅1) fortlaufend verglichen werden und
bei Überschreiten einer vorgebbaren Differenz (Δ) zwischen dem ersten und zweiten verglichenen Durchschnittswert (L̅1, L̅2) ein Klopflaut (1, 2, 3, 4) erkannt wird und eines der elektronsichen Steuersignale (30) abgegeben wird.

8. Verfahren nach einem der Ansprüche 5 bis 7,
**dadurch gekennzeichnet, dass** aufeinanderfolgende erkannte Klopflaute (1, 2, 3, 4) in jeweils einem Takt (K1, K2, K3, K4, ...) zusammengefasst werden und ein zeitlicher Abstand (tK2-tK1, tK3-tK2, tK4-tK3, ...) zwischen aufeinanderfolgenden Takten (K1, K2, K3, K4, ...) bestimmt wird und die Geschwindigkeit der Bewegung der Bildschirmfigur (12) aus dem zeitlichen Abstand (tK2-tK1, tK3-tK2, tK4-tK3, ...) bestimmt wird.

9. Verfahren nach Anspruch 8,
**dadurch gekennzeichnet, dass** in einer zweiten Vergleichseinheit zeitliche Abstände (tK2-tK1, tK3-tK2, tK4-tK3, ...) zwischen aufeinanderfolgenden, aus Klopflauten (1, 2, 3, 4) gebildeten Takten (K1, K2, K3, K4, ...) bestimmt werden, den zeitlichen Abständen Referenzwerte (S2, S3, S4, ...) zugeordnet werden und aus Abweichungen (δ1, δ2, ...) der zeitlichen Abstände (tK2-tK1, tK3-tK2, tK4-tK3, ...) von den zugeordneten Referenzwerten (S2, S3, S4, ...) die Geschwindigkeit der Bewegung der Bildschirmfigur (12) bestimmt wird.

10. Verfahren nach Anspruch 9,
**dadurch gekennzeichnet, dass** die Geschwindigkeit der Bildschirmfigur (12) desto höher bestimmt wird, je geringer die Abweichung der zeitlichen Abstände (tK2-tK1, tK3-tK2, tK4-tK3, ...) von den zugeordneten Referenzwerten (S2, S3, S4, ...) bestimmt wird.

11. Verfahren nach einem der Ansprüche 5 bis 10,
**dadurch gekennzeichnet, dass** die Klopflaute (1, 2, 3, 4) durch das aufeinanderfolgende Auftippen von vier Spielfingern des Spielers erzeugt werden.

12. Verfahren nach einem der Ansprüche 5 bis 11,
**dadurch gekennzeichnet, dass** die Büdschirmfigur (12) ein Wettrennen gegen andere Bildschirmfiguren ausführt.
